# EUROPÄISCHE PATENTSCHRIFT

(11) **EP 3 791 463 B1**
(45) Veröffentlichungstag und Bekanntmachung des Hinweises auf die Patenterteilung: **23.03.2022**
(21) Anmeldenummer: 19748757.2
(22) Anmeldetag: 17.07.2019
(51) Int. Cl.: H02K 15/12

(54) **VERFAHREN ZUR WÄRMEBEHANDLUNG EINER FORMLITZE, SOWIE VERFAHREN ZUR HERSTELLUNG EINES ELEKTROMOTORS BZW. KRAFTFAHRZEUGES**
METHOD FOR THE THERMAL TREATMENT OF A COMPRESSED STRAND, METHOD FOR PRODUCING AN ELECTRIC MOTOR, AND METHOD FOR PRODUCING A MOTOR VEHICLE
PROCÉDÉ DE TRAITEMENT THERMIQUE D'UN TORON PROFILÉ ET PROCÉDÉ DE FABRICATION D'UN MOTEUR ÉLECTRIQUE OU D'UN VÉHICULE AUTOMOBILE

(30) Priorität: 17.07.2018 DE 102018211867
(43) Veröffentlichungstag der Anmeldung: 17.03.2021
(73) Patentinhaber: JHEECO E-DRIVE AG, 9492 Eschen (LI)
(72) Erfinder: STÖCK, Martin, 9465 Salez (CH)
(74) Vertreter: Grünecker Patent- und Rechtsanwälte PartG mbB
(86) Internationale Anmeldenummer: PCT/EP2019/069204
(87) Internationale Veröffentlichungsnummer: WO 2020/016278

(56) Entgegenhaltungen:
- EP-A1- 2 328 154
- EP-A1- 3 096 440
- DE-A1- 3 639 631
- DE-A1- 3 718 429
- JP-A- 2008 072 825
- US-A1- 2010 320 194

## Beschreibung

Die Erfindung betrifft ein Verfahren zur Wärmebehandlung einer Formlitze gemäß dem Oberbegriff des Anspruchs 1, ein Verfahren zur Herstellung eines Elektromotors gemäß dem Oberbegriff des Anspruchs 10, - sowie ein Verfahren zur Herstellung eines Kraftfahrzeuges mit einem Elektromotor gemäß dem Oberbegriff des Anspruchs 11.

Formlitzen sind Litzen, d.h. verdrillte oder unverdrillte Drahtbüschel, welche kompaktiert werden und damit eine bestimmte Querschnittsform, meist eine rechteckige Querschnittsform, erhalten. Bei den Drähten handelt es sich bevorzugt um Kupferdrähte oder Drähte aus einer Kupferlegierung. Die Drähte selbst oder auch die Formlitze ist von einem Isolationsmaterial, beispielsweise einem Lack, umgeben. Zumeist weisen Formlitzen endseitige Kabelschuhe auf, die als elektrischer und/oder mechanischer Anschluss der Formlitze dienen.

Formlitzen können als Segmentleiter in elektrischen Maschinen, insbesondere in Statoren, Einsatz finden. Segmentleiter sind Leiterabschnitte, welche z.B. in Statornuten eingelegt oder eingezogen werden. Die überstehenden Enden zweier Formlitzen können dann unmittelbar zu Halbspulen verbunden werden.

Bei der Herstellung der Formlitzen werden die Drähte verformt, insbesondere kaltverformt. Durch die Umformung können negative Effekte auftreten, wie beispielsweise eine Abnahme der elektrischen Leitfähigkeit, da der ohmsche Widerstand durch die Kaltverfestigung steigt.

Abhilfe stellt hier eine Wärmebehandlung der Formlitzen, beispielsweise in Form eines Rekristallisationsglühens, vor dem Einbau in den Elektromotor dar. Die durch die Kaltverformung verrückte Gitterstruktur kann durch das Glühen partiell oder ganz wieder geheilt werden. Dies hängt im Wesentlichen von der Glühtemperatur und der Dauer ab. Beim Rekristallisationsglühen wird das Korngefüge gänzlich neu gebildet; dies ist für die elektrische Leitfähigkeit optimal.

Derartige Verfahren sind beispielsweise aus der EP 30 96 440 A bekannt geworden. Nachteilig an diesem Verfahren ist jedoch, dass der Verfahrensaufwand relativ groß ist.

Die Formlitze wird in einer Art Stativ eingespannt und mittels elektrischen Stroms aufgeheizt. Es ist einsichtig, dass dieser Vorgang für eine Massenfertigung von Elektromotoren, welche mit dieser Formlitze ausgestattet werden sollen, einigermaßen aufwendig ist.

Erwärmung einer Spule durch elektromagnetische Induktion vor oder im Rahmen eines Harzgießprozesses oder eines Lackaufbringprozesses der Spule ist ebenfalls z. B. aus US 2010/0320194 A1 und JP 2008 072825 A bekannt.

Hier setzt die vorliegende Erfindung an und macht es sich zur Aufgabe, ein verbessertes Verfahren zur Herstellung eines Elektromotors vorzuschlagen, insbesondere ein Verfahren vorzuschlagen, welches eine rationellere Wärmebehandlung der Formlitze ermöglich.

Erfindungsgemäß wird diese Aufgabe durch das Verfahren nach Anspruch 1 gelöst, wobei die Formlitze in einem bestimmungsgemäß verbauten Zustand in einer Komponente eines Elektromotors einer Wärmebehandlung unterzogen wird. Mit anderen Worten, die Formlitzen werden im bereits verbauten und verschalteten Zustand und nicht in einer externen Vorrichtung einer Wärmebehandlung unterzogen. Hierdurch werden separate Apparaturen obsolet. Ferner ist die Wärmebehandlung in einem bereits verbauten Zustand der Formlitze auch deshalb vorteilhaft, als dass die Formlitzen nicht mehr unabhängig voneinander, sondern gemeinsam im Zielsystem wärmebehandelt werden. Insofern können die verbauten Formlitzen bereits in Wechselwirkung treten, wodurch wechselseitige Einflüsse der Formlitzen aufeinander besser kompensiert werden können. Resultat ist ein Formlitz-System mit geringerer Varianz zwischen den einzelnen Segmentleitern. Die Gesamteffizienz des Systems erhöht sich. Temperatur-Hotspots werden qualitativ und quantitativ verringert.

Hierbei wird die Erwärmung der Formlitze für die Wärmebehandlung durch die Beaufschlagung der Formlitze mit elektrischem Strom vorgenommen. Diese Art der Einbringung von Wärme für die Wärmebehandlung der Formlitze eröffnet zahlreiche Vorteile. Beispielsweise wird der durch das System fließende Strom genau die Stellen stärker erhitzen, die einen höheren Widerstand haben. Dadurch werden genau die Fehlstellen des Formlitz-Systems länger und/oder mit höherer Temperatur beaufschlagt und damit erfolgreicher wärmebehandelt. Eine Wärmebehandlung durch Bestromung hat ferner den Vorteil, dass Wärme innerhalb des Leiters erzeugt wird und nicht von außen durch das Isolationsmaterial dringen muss. Das Isolationsmaterial wird daher weniger stark erhitzt als bei Glühöfen. Darüber hinaus ist die Glüh-Temperatur durch Bestromung frei wählbar und zeitlich sehr variabel. Damit können verschiedene Glühtemperatur-Verläufe gefahren werden ohne dabei aufwändige Temperaturtunnel, wie beispielsweise in Fertigungslinien mit Glühstraßen, mit unterschiedlichen Temperaturbereichen vorhalten zu müssen. Weiterhin ist jeder der Motorwicklungen individuell bestrom- und damit wärmebehandelbar: Zwei unterschiedliche Motoren können auf demselben "Wärmebehandlungsstand" zwei unterschiedliche Wärmebehandlungskurven erfahren - vorteilhafte Glühkurven können z.B. experimentell ermittelt werden. Wärmebehandlungskurve meint dabei einen bestimmten Zeit- Temperaturverlauf bzw. Strom-Zeit-Verlauf.

Nicht erfindungsgemäß erfolgt die Wärmebehandlung an der Formlitze nach Fertigstellung des Elektromotors und vor dem Einbau in ein Fahrzeug und die Wärmebehandlung an der Formlitze findet bei überhöhter Temperatur d.h. bei einer Temperatur oberhalb der Langzeit-Beständigkeitstemperatur des Isolationsmaterials statt. Diese Herstellungsvariante hat den Vorteil, einen frühzeitigen Ausfall des Systems zu provozieren und so zu verhindern, dass fehleranfällige Produkte in das Endprodukt eingebaut werden. Die Wärmebehandlung der Formlitze innerhalb der Fertigungslinie, also nach Fertigstellung der Komponente oder nach Fertigstellung des Elektromotors und vor dem Einbau in das Fahrzeug, kann bevorzugt parallel mit anderen Qualitätstests ausgeführt, so dass sich die Dauer des Herstellungsprozesses durch die Wärmebehandlung der Formlitze nicht bzw. nur kaum verlängert. Bevorzugt ist hierfür der Testlauf des Motorsystems während der Endabnahme.Weitere vorteilhafte Ausgestaltungen der vorgeschlagenen Erfindung ergeben sich insbesondere aus den Merkmalen der Unteransprüche. Die Gegenstände bzw. Merkmale der verschiedenen Ansprüche können grundsätzlich beliebig miteinander kombiniert werden.

Erfindungsgemäß wird die Wärmebehandlung nach bzw. bei Inbetriebnahme des Fahrzeugs mit dem Elektromotor durchgeführt.

In einer weiteren vorteilhaften Ausgestaltung des Verfahrens kann vorgesehen sein, dass es sich bei der Wärmebehandlung um ein Rekristallisationsglühen oder ein Spannungsarmglühen handelt.

In einer weiteren vorteilhaften Ausgestaltung des Verfahrens kann vorgesehen sein, dass es sich bei der Komponente des Elektromotors um den Stator und/oder Rotor des Elektromotors handelt. Vorzugsweise wird die Formlitze in dem Stator, insbesondere als Segmentleiter, verbaut.

In einer weiteren vorteilhaften Ausgestaltung des Verfahrens kann vorgesehen sein, dass die Formlitze mit einem Isolationsmaterial ausgestattet ist, wobei die Wärmebehandlung bei einer Temperatur unterhalb, gleich oder oberhalb der Langzeit-Temperaturbeständigkeit des Isolationsmaterials vorgenommen wird. Soweit Drähte oder Litzen ohne Isolation wärmebehandelt werden bzw. nur wenig wärmeempfindliche Isolationsmaterialien aufweisen, ist die Wärmebehandlungstemperatur in weiten Bereichen wählbar. Soll aber eine isolierte Formlitze bzw. deren isolierte Drähte wärmebehandelt werden, so besteht Zielkonflikt zwischen "optimaler" Wärmebehandlungstemperaturtemperatur und Erhalt der Isolierung. Aus diesem Grund werden isolierte Leiter oder Litzen in der Regel nicht oder nur unter sehr niedrigen Temperaturen (weit unterhalb der Rekristallisationstemperatur) wärmebehandelt. Eine längere Dauer bei der Wärmebehandlung kann eine niedrigere Temperatur teilweise wettmachen, ist in der Fertigungslinie aber wirtschaftlich nur bedingt sinnvoll. Ein Wärmebehandlungsprozess unterhalb der Beständigkeitstemperatur des Isolationsmaterial schont das Isolationsmaterial, beansprucht aber einen längeren Wärmebehandlungsprozess. Die Wärmebehandlung kann alternativ auch bei einer Temperatur oberhalb der Temperaturbeständigkeit des Isolationsmaterials vorgenommen werden. Mit dieser Vorgehensweise wird bewusst die Toleranz des Isolationsmaterials in Bezug auf Kurzzeit-Temperaturbeständigkeit ausgenutzt, dergestalt, dass die Wärmebehandlung oberhalb der dauerfesten Langzeit-Temperaturbeständigkeit des Isolationsmaterials durchgeführt wird. Dies führt, bei fachmännischer Ausführung, nicht zwangsläufig zur Zerstörung des Isolationsmaterials, kann jedoch zu erheblich kürzeren Wärmebehandlungsdauern führen, so dass der Herstellprozess weiter rationalisiert werden kann. Denkbar ist selbstverständlich auch eine Wärmebehandlung bei einer Temperatur die der maximalen Langzeit-Beständigkeitstemperatur des Isolationsmaterials entspricht.

Als besonders vorteilhaft für die Wärmebehandlung haben sich Temperaturen von 150-250°C, insbesondere 170°+-10°C, herausgestellt. Bei derlei Temperaturen in der Nähe der dauerhaften Temperaturbeständigkeit des Isolationsmaterials kann über weite Zeiträume eine Wärmebehandlung durchgeführt werden, ohne dass eine vorzeitige Degradation des Materials aufgrund zu hohen Wärmeeintrags befürchtet werden muss. Als ferner vorteilhaft hat sich für die Dauer einer einzelnen Wärmebehandlung ein Zeitraum von 30 bis 300 Minuten herausgestellt. Dieser Zeitraum ist ausreichend lang, dass sich über alle Formlitzen eine gleichmäßige Temperaturverteilung einstellen kann, so dass sich Gitterfehler in den Formlitzdrähten abbauen können. Weiterhin steigt mit der Länge der Wärmebehandlung das Vertrauensintervall für die Vorhersagbarkeit der Auswirkungen der Wärmebehandlung. Ausfallwahrscheinlichkeiten sind damit präziser vorhersagbar als bei häufigeren, aber kürzeren Wärmebehandlungsdauern mit insgesamt gleicher Wirkungsdauer.

In einer weiteren vorteilhaften Ausgestaltung des vorgeschlagenen Verfahrens kann vorgesehen sein, dass die kumulierte Wärmebehandlungsdauer an der Formlitze einen Anteil von 10% an der Betriebszeit der Formlitze nicht überschreitet. Dadurch kann der temperaturbedingte Alterungs-Einfluss der Wärmebehandlung auf das Isolationsmaterial kontrollierbar klein gehalten werden. Insbesondere lassen sich Ausfallwahrscheinlichkeiten und andere Risiken vorhersagen.

Erfindungsgemäß erfolgt die Wärmebehandlung an der Formlitze nach bzw. bei der Inbetriebnahme des Fahrzeuges und wird die Erwärmung der Formlitze durch Regulieren oder Ausschalten der Motorkühlung und/oder durch Leerlast, insbesondere infolge von gezielt aufgebrachten Verlustströmen, welche Wärme, jedoch kein Drehmoment erzeugen, erzeugt.

Die vorgenannten Möglichkeiten zeichnen sich dadurch aus, dass sie im Elektromotor bzw. im Fahrzeug auf einfache Art und Weise durchführbar sind, da auf ohnehin vorhandene Elemente, wie beispielsweise die Motorkühlung bzw. Motormanagement zurückgegriffen wird. Letztendlich können diese Maßnahmen auch vom Endbenutzer des Kraftfahrzeugs durchgeführt bzw. eingeleitet werden. Denkbar ist aber selbstverständlich auch eine automatisierte Einleitung der Wärmebehandlung, beispielsweise basierend auf Widerstandsmessungen oder vorprogrammierten Zeitintervallen.

Zur Rationalisierung des Produktionsprozesses kann es vorgesehen sein, die Wärmebehandlung in Teilintervalle zu zerlegen und einen ersten Teil vor Erst-Inbetriebnahme eines Fahrzeugs, und alle weiteren Zeitintervalle nach Inbetriebnahme des Fahrzeugs auszuführen. Dadurch können Durchlaufzeiten in der Motorfertigung ohne dauerhafte Wirkungsgradeinbußen verkleinert werden.

In einer weiteren vorteilhaften Ausgestaltung des Verfahrens kann vorgesehen sein, dass die Wärmebehandlung regelmäßig, insbesondere quartalsweise oder jährlich, wiederholt wird. Hierdurch kann sichergestellt werden, dass etwaige Kaltverfestigungen in Formlitzen, wie sie beispielsweise durch extern eingetragene Vibrationen entstehen, nicht zu einem stetig schlechter werdenden Wirkungsgrad der Formlitze führen.

In einer weiteren vorteilhaften Ausgestaltung des Verfahrens kann vorgesehen sein, dass Formlitzen mit einem Kompaktierungsgrad höher als 80% verwendet werden. Durch den hohen Kompaktierungsgrad ist der Wärmeübergang zwischen Einzeldrähten einer Formitze höher als bei weniger stark kompaktierten. Dadurch stellt sich eine homogenere Temperaturverteilung über den Formlitzquerschnitt ein, so dass höhere Glühtemperaturen gefahren werden können. Insbesondere können die inneren Einzeldrähte bzw. die Drähte der Formlitzseele näher an die bis zum Verbrennen der Einzeldrahtisolation zulässigen Maximaltemperatur erhitzt werden ohne dass dabei die zulässige Maximaltemperatur der Einzeldrahtisolation der äußersten Drähte überschritten wird. Insgesamt können dadurch Glühzeiten verkürzt werden. Eine weitere Aufgabe der Erfindung liegt darin, ein verbessertes Verfahren zur Herstellung eines Elektromotors mit mindestens einer Komponente mit mindestens einer Formlitze vorzuschlagen, insbesondere ein Verfahren vorzuschlagen, welches eine rationellere Wärmebehandlung der Formlitze ermöglich.

Erfindungsgemäß wird diese Aufgabe durch ein Verfahren mit den kennzeichnenden Merkmalen des Anspruchs 10 gelöst. Dadurch, dass der Elektromotor unter Anwendung des Verfahrens zur Wärmebehandlung einer Formlitze hergestellt wird, können die sich durch das Wärmebehandlungsverfahren ergebenden Vorteile für die Herstellung des Elektromotors nutzbar gemacht werden.

Eine weitere Aufgabe der vorliegenden Erfindung liegt darin, ein verbessertes Verfahren zur Herstellung eines Kraftfahrzeuges mit einem Elektromotor vorzuschlagen, insbesondere ein Verfahren vorzuschlagen, welches eine rationellere Wärmebehandlung der Formlitze in dem Elektromotor ermöglicht.

Erfindungsgemäß wird diese Aufgabe durch ein Verfahren mit den kennzeichnenden Merkmalen des Anspruchs 11 gelöst. Dadurch, dass das Fahrzeug bzw. der Elektromotor des Fahrzeuges unter Anwendung des Verfahrens zur Wärmebehandlung einer Formlitze hergestellt wird, können die sich durch das Wärmebehandlungsverfahren ergebenden Vorteile für die Herstellung des Elektromotors bzw. Fahrzeuges nutzbar gemacht werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen schematisch
- Fig. 1: eine zur erfindungsgemäßen Wärmebehandlung vorgesehene Formlitze in einer seitlichen Ansicht;
- Fig. 2: eine zur erfindungsgemäßen Wärmebehandlung vorgesehene Formlitze in einer Ansicht von vorne;
- Fig. 3: ein Stator eines Elektromotors mit Formlitzen und Wickelköpfen in einer seitlichen geschnittenen Ansicht;
- Fig. 4: ein Stator eines Elektromotors mit Formlitzen und Verschaltungsstegen in einer Ansicht von vorne;

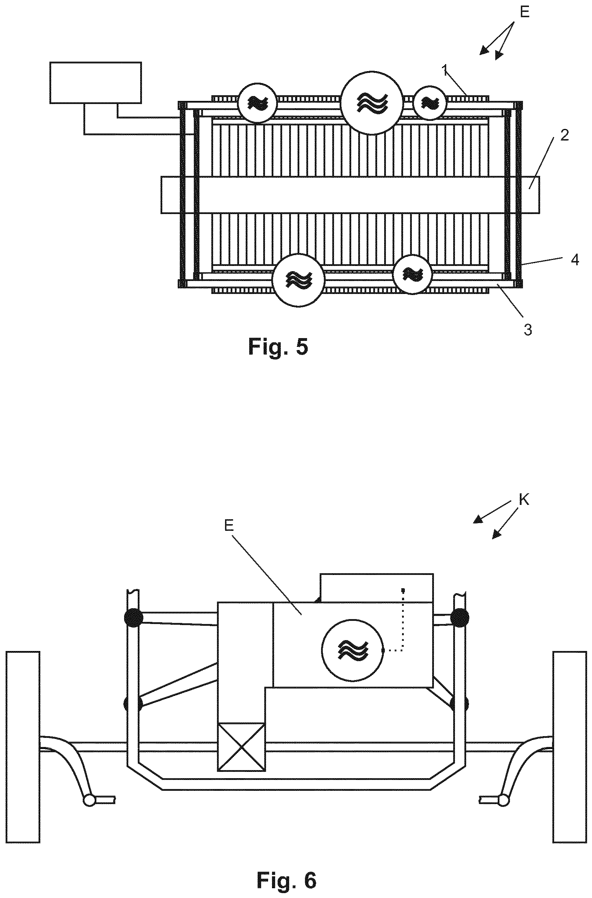

- Fig. 5: ein Elektromotor mit einem mit Formlitzen ausgestatteten Stator in einer seitlichen geschnittenen Ansicht;
- Fig. 6: ein Kraftfahrzeug mit einem mit Formlitzen ausgestatteten Elektromotors.

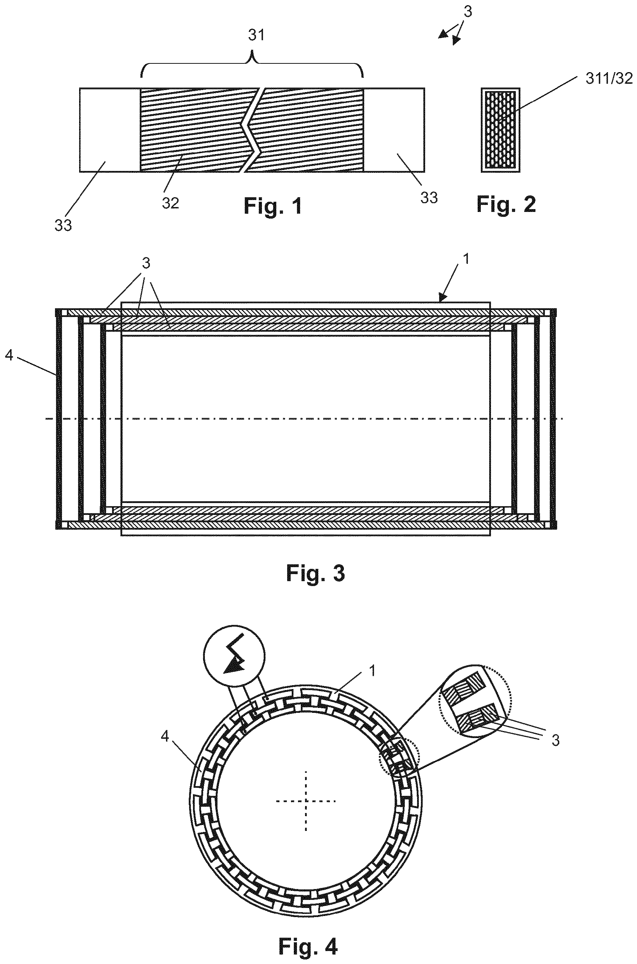

Zunächst wird auf Fig. 1 Bezug genommen.

Eine Formlitze 3 umfasst im Wesentlichen eine Anzahl von Drähten 311, insbesondere Kupferdrähte oder Drähte aus einer Kupferlegierung. Die Drähte 311 sind in der Regel zu einem Drahtpaket 31 miteinander verdrillt und das verdrillte Drahtpaket 31 zudem kompaktiert, insbesondere zu einem rechteckförmigen Querschnitt verpresst. Zudem sind vorzugsweise die einzelnen Drähte mit einer Isolierung, in der Regel einem Lack, sowie vorzugsweise das Drahtpaket mit einer Isolierung 32 versehen. Zumeist weisen Formlitzen endseitige Hülsen 33 auf, die als elektrischer und insbesondere mechanischer Anschluss der Formlitze dienen.

Ein Elektromotor E, insbesondere ein Asynchronmotor, umfasst als Hauptkomponenten im Wesentlichen einen Stator 1 und einen Rotor 2. Bevorzugt ist eine Komponente des Elektromotors, vorzugsweise der Stator, denkbar aber auch der Rotor, mit mindestens einer Formlitze 3 ausgestattet. Die verwendeten Formlitzen sind bevorzugt als stabförmige Segmentleiter ausgebildet. Die Formlitze wird vorzugsweise in einer dem Fachmann bekannten Art und Weise in die Komponente eingebaut. Die Formlitzen können beispielsweise mittels Verschaltungsstegen 4 miteinander verbunden werden. Die Komponente mit der bzw. den Formlitzen wird mit weiteren Komponenten zu einem Elektromotor E zusammengebaut. Der Elektromotor wird wiederum in ein Fahrzeug K, vorzugsweise in ein Kraftfahrzeug, eingebaut.

Die Wärmebehandlung erfolgt nach bzw. bei Inbetriebnahme des Fahrzeugs mit dem Elektromotor.

Bei der Wärmebehandlung handelt es sich vorzugsweise um Rekristallisationsglühen oder Spannungsarmglühen. Unter Rekristallisationsglühen soll ein Glühen ohne Phasenänderung bei einer Temperatur im Rekristallisationsbereich nach einer Kaltumformung verstanden werden. Unter Spannungsarmglühen soll ein Glühen ohne Phasenänderung bei einer Temperatur unterhalb der Rekristallisationstemperatur nach einer Kaltverformung verstanden werden.

Die Einbringung von Wärme für die Wärmebehandlung der Formlitze erfolgt durch Bestromung der Formlitze, d.h. durch die Beaufschlagung der zu erwärmenden Formlitze mittels elektrischem Strom. (Symbole mit geschlängelten Linien stellen Wärmeeintrag dar.) Die einzelnen Formlitzen können dabei selektiv erwärmt werden, insbesondere können einzelne Stromkreise von Formlitzen gezielt mit Strom zur Wärmebehandlung beaufschlagt werden.

Die Qualität des Wärmebehandlungsprozesses ist im Wesentlichen abhängig von den Faktoren Temperatur und Zeit. Hinsichtlich der Temperatur ist beachtlich, dass die Formlitze 3 mit Isolationsmaterial 32 beaufschlagt ist, welches ab einer gewissen Temperatur Schaden nimmt, so dass die Zeit der Wärmebehandlung in den Vordergrund tritt. Die maximal zulässige Temperatur ist im Prinzip durch das Isolationsmaterial beschränkt.

Die Temperaturbeständigkeit von Isolationsmaterial wird in der Regel in Klassen nach DIN EN 60085 eingeteilt. In Elektromotoren sind die Klassen F (bis 155°C) und H (bis 180°C) üblich. Ein Betrieb oberhalb der Temperatur führt nicht zum sofortigen Ausfall der Isolierung, gleichwohl können sich die Isolationseigenschaften (temporär) verschlechtern, sowie die Lebensdauer oder Alterungsbeständigkeit (permanent) gesenkt werden. Dies ist insbesondere bei ausreichend genauer Kenntnis des temperaturbedingten Alterungsverhaltens eines Isolationsmaterials unter Rücksichtnahme auf die Produktanforderungen ingewissem Rahmen hinnehmbar.

In einer Ausführungsvariante wird also bei Temperaturen oberhalb der Isolationsklasse geglüht, wobei die kumulierte Glühdauer über die Lebenszeit einen Anteil von 10% der Nutzzeit nicht überschreitet. Anzustreben sind Temperaturen von 150-250°C, insbesondere 170°+-10°C. Typische Zeitintervalle für die Wärmebehandlung bewegen sich zwischen 30-300 Minuten.

Je nachdem in welchem Fabrikationsstadium die Wärmebehandlung vorgenommen wird, können sich besondere Vorteile ergeben.

So kann nicht erfindungsgemäß vorgesehen sein, dass die Wärmebehandlung nach Fertigstellung des Elektromotors und vor dem Einbau in ein Fahrzeug erfolgt und eine Wärmebehandlung bei überhöhter Temperatur stattfindet. Mit überhöhter Temperatur ist hier eine Temperatur oberhalb der durch die Isolationsklasse zugelassenen Temperatur gemeint. Diese aggressive Herstellungsvariante hat den Vorteil, einen frühzeitigen Ausfall des Systems zu provozieren, und so zu verhindern, dass fehleranfällige Produkte in das Endprodukt eingebaut werden.

Die Wärmebehandlung der Formlitze innerhalb der Fertigungslinie, also nach Fertigstellung der Komponente oder nach Fertigstellung des Elektromotors und vor dem Einbau in das Fahrzeug, wird nicht erfindungsgemäß parallel mit anderen Qualitätstests ausgeführt, so dass sich die Dauer des Proktionsprozesses durch die Wärmebehandlung der Formlitze nicht bzw. nur kaum verlängert. Bevorzugt ist hierfür der Testlauf des Motorsystems während der Endabnahme.

Erfindungsgemäß erfolgt Wärmebehandlung an der Formlitze nach bzw. bei der Inbetriebnahme des Fahrzeuges.

Erfindungsgemäß erfolgt dies über ein aktives Temperaturmanagement. Um die Temperatur auch in Zeitintervallen niedriger Motornutzung hoch zu halten, kann das aktive Temperaturmanagement folgende Maßnahmen umfassen: a) Bewusstes Herunterfahren oder sogar Ausschalten der Motorkühlung b) Erzeugen von Motorwärme durch Leerlast, z.B. infolge von gezielt aufgebrachten Verlustströmen, die Wärme, jedoch kein Drehmoment erzeugen. Bevorzugt wird der Glühprozess regelmäßig wiederholt, z.B. quartalsweise oder jährlich, um alterungsbedingten Verschlechterungen der elektrischen Leitfähigkeit vorzukommen. Je nach Anwendungsfall ist die Bestromung vorteilhaft so zu wählen, dass gerade ein oder gerade kein Drehmoment auftritt (z.B. erzeugt Gleichstrom bei einer Asynchron-Maschine kein Drehmoment). Besonders geeignet ist das vorgeschlagene Verfahren für Formlitzen mit einem Kompaktierungsgrad höher als 80%. Mit Kompaktierungsgrad ist das Verhältnis der Drahtfläche (Kupferdraht und diesen umhüllender Isolationslack) gegenüber der kleinsten Umhüllenden der Formlitze (exklusive Hauptisolation) gemeint.

### Bezugszeichenliste

Folgende Bezugszeichen werden in den Abbildungen verwendet:
- K: Kraftfahrzeug
- E: Elektromotor

- 1: Stator
- 2: Rotor
- 3: Formlitze
- 4: Verschaltungssteg

- 31: Drahtpaket
- 32: Isolierung
- 33: Hülse

- 311: Draht

## Patentansprüche

1. Verfahren zur Wärmebehandlung einer Formlitze (3), **dadurch gekennzeichnet, dass** die Wärmebehandlung der Formlitze in einem bestimmungsgemäß verbauten Zustand in einer Komponente eines Elektromotors (E) durchgeführt wird,
wobei die Erwärmung der Formlitze (3) für die Wärmebehandlung durch die Beaufschlagung der Formlitze mit elektrischem Strom vorgenommen wird,
wobei die Wärmebehandlung an der Formlitze (3) nach bzw. bei der Inbetriebnahme des Fahrzeugs mit dem Elektromotor (E) erfolgt und die Erwärmung der Formlitze durch Regulieren oder Ausschalten der Motorkühlung und/oder durch Leerlast, insbesondere infolge von gezielt aufgebrachten Verlustströmen, die Wärme, jedoch kein Drehmoment erzeugen, erzeugt wird.

2. Verfahren nach mindestens einem der vorhergehenden Ansprüche, **dadurch gekennzeichnet, dass** es sich bei der Wärmebehandlung um ein Rekristallisationsglühen oder Spannungsarmglühen handelt.

3. Verfahren nach mindestens einem der vorhergehenden Ansprüche, **dadurch gekennzeichnet, dass** es sich bei der Komponente des Elektromotors (E) um einen Stator (1) und/oder Rotor (2) des Elektromotors handelt.

4. Verfahren nach mindestens einem der vorhergehenden Ansprüche, **dadurch gekennzeichnet, dass** die Formlitze (3) mit einem Isolationsmaterial (32) ausgestattet ist, wobei die Wärmebehandlung bei einer Temperatur unterhalb, gleich oder oberhalb der Temperaturbeständigkeit des Isolationsmaterials durchgeführt wird.

5. Verfahren nach mindestens einem der vorhergehenden Ansprüche, **dadurch gekennzeichnet, dass** die Wärmebehandlung bei einer Temperatur von 150-250°C, insbesondere 170°+-10°C, durchgeführt wird.

6. Verfahren nach mindestens einem der vorhergehenden Ansprüche, **dadurch gekennzeichnet, dass** eine einzelne Wärmebehandlung über einen Zeitraum von 30 bis 300 Minuten durchgeführt wird.

7. Verfahren nach mindestens einem der vorhergehenden Ansprüche, **dadurch gekennzeichnet, dass** die kumulierte Wärmebehandlungsdauer einen Anteil von 10% der Betriebszeit der Formlitze (3) nicht überschreitet.

8. Verfahren nach mindestens einem der vorhergehenden Ansprüche, **dadurch gekennzeichnet, dass** die Wärmebehandlung regelmäßig, insbesondere quartalsweise oder jährlich, wiederholt wird.

9. Verfahren nach mindestens einem der vorhergehenden Ansprüche, **dadurch gekennzeichnet, dass** Formlitzen (3) mit einem Kompaktierungsgrad höher als 80% verwendet werden.

10. Verfahren zur Herstellung eines Elektromotors (E) mit mindestens einer Komponente mit mindestens einer Formlitze (3), **gekennzeichnet durch** ein Verfahren zur Wärmebehandlung einer Formlitze (3) gemäß mindestens einem der vorhergehenden Ansprüche.

11. Verfahren zur Herstellung eines Kraftfahrzeuges (K) mit einem Elektromotor (E), **gekennzeichnet durch** ein Verfahren zur Herstellung des Elektromotors gemäß Anspruch 10.

## Claims

1. Method for the thermal treatment of a compressed strand (3), **characterized in that** the thermal treatment of the compressed strand is carried out in a state installed as intended in a component of an electric motor (E),
wherein heating said compressed strand (3) for thermal treatment is carried out by applying electric current to said compressed strand,
wherein the thermal treatment on said compressed strand (3) takes place after or during the initial operation of said vehicle, respectively, and said compressed strand is heated by regulating or switching off the motor cooling and/or by idling load, in particular as a result of intentionally applied leakage currents which generate heat but no torque.

2. Method according to at least one of the preceding claims, **characterized in that** the thermal treatment is recrystallization annealing or stress relief annealing.

3. Method according to at least one of the preceding claims, **characterized in that** said component of said electric motor (E) is a stator (1) and/or a rotor (2) of said electric motor.

4. Method according to at least one of the preceding claims, **characterized in that** said compressed strand (3) is equipped with an insulation material (32), where the thermal treatment is carried out at a temperature below, equal to, or above the temperature resistance of said insulation material.

5. Method according to at least one of the preceding claims, **characterized in that** the thermal treatment is carried out at a temperature of 150-250° C, in particular 170° + -10° C.

6. Method according to at least one of the preceding claims, **characterized in that** a single thermal treatment is carried out over a period of 30 to 300 minutes.

7. Method according to at least one of the preceding claims, **characterized in that** the cumulative thermal treatment period does not exceed a proportion of 10% of the operating time of said compressed strand (3).

8. Method according to at least one of the preceding claims, **characterized in that** the thermal treatment is repeated regularly, in particular quarterly or annually.

9. Method according to at least one of the preceding claims, **characterized in that** compressed strands (3) having a degree of compaction higher than 80% are used.

10. Method for producing an electric motor (E) with at least one component having at least one compressed strand (3), **characterized by** a method for the thermal treatment of a compressed strand (3) according to at least one of the preceding claims.

11. Method for producing a motor vehicle (K) with an electric motor (E), **characterized by** a method for producing said electric motor according to claim 10.

## Revendications

1. Procédé de traitement thermique d'un toron profilé (3), **caractérisé en ce que** le traitement thermique du toron profilé est effectué, en utilisation normale, dans un composant d'un moteur électrique (E),
dans lequel le chauffage du toron profilé (3) pour le traitement thermique est effectué par l'application d'un courant électrique au toron profilé,
dans lequel le traitement thermique sur le toron profilé(3) survient après ou pendant le démarrage du véhicule avec le moteur électrique (E), et le chauffage du toron profilé est généré par régulation ou coupure du refroidissement de moteur et/ou par une charge à vide, en particulier par application volontaire de courants de fuite qui génèrent de la chaleur mais pas de couple.

2. Procédé selon l'une quelconque des revendications précédentes, **caractérisé en ce que** le traitement thermique est un recuit de recristallisation ou un recuit de détensionnement.

3. Procédé selon au moins l'une quelconque des revendications précédentes, **caractérisé en ce que** le composant du moteur électrique (E) est un stator (1) et/ou un rotor (2) du moteur électrique.

4. Procédé selon au moins l'une quelconque des revendications précédentes, **caractérisé en ce que** le toron profilé (3) est muni d'un matériau isolant (32), dans lequel le traitement thermique est effectué à une température inférieure, égale ou supérieure à la résistance à la température du matériau isolant.

5. Procédé selon au moins l'une quelconque des revendications précédentes, **caractérisé en ce que** le traitement thermique est effectué à une température de 150 à 250°C, en particulier de 170°C + -10°C.

6. Procédé selon au moins l'une quelconque des revendications précédentes, **caractérisé en ce qu'**un traitement thermique unique est utilisé pendant une durée de 30 à 300 minutes.

7. Procédé selon au moins l'une quelconque des revendications précédentes, **caractérisé en ce que** le temps de traitement thermique cumulé ne dépasse pas une proportion de 10 % du temps de fonctionnement du toron profilé (3).

8. Procédé selon au moins l'une quelconque des revendications précédentes, **caractérisé en ce que** le traitement thermique est répété régulièrement, en particulier tous les trimestres ou tous les ans.

9. Procédé selon au moins l'une quelconque des revendications précédentes, **caractérisé en ce que** des torons profilés (3) sont utilisés, avec un degré de compactage supérieur à 80 %.

10. Procédé de fabrication d'un moteur électrique (E) avec au moins un composant avec au moins un toron profilé (3), **caractérisé par** un procédé de traitement thermique d'un toron profilé (3) selon au moins l'une des revendications précédentes.

11. Procédé de fabrication d'un véhicule automobile (K) pourvu d'un moteur électrique (E), **caractérisé par** un procédé de fabrication d'un moteur électrique selon la revendication 10.
